# EUROPEAN PATENT SPECIFICATION

(11) **EP 3 632 717 B1**
(45) Date of publication and mention of the grant of the patent: **15.11.2023**
(21) Application number: 18810566.2
(22) Date of filing: 09.05.2018
(51) Int. Cl.: B60G 21/055, F16C 11/06

(54) **JOINT STRUCTURE OF STABILIZER LINK**
VERBINDUNGSSTRUKTUR EINER STABILISATORVERBINDUNG
STRUCTURE DE CHARNIÈRE DE LIAISON DE STABILISATION

(30) Priority: 02.06.2017 JP 2017110408
(43) Date of publication of application: 08.04.2020
(73) Proprietor: NHK Spring Co., Ltd., Yokohama-shi, Kanagawa 236-0004 (JP)
(72) Inventor: KURODA Shigeru, Yokohama-shi Kanagawa 236-0004 (JP); OHMURA Shuji, Yokohama-shi Kanagawa 236-0004 (JP)
(74) Representative: Dehns
(86) International application number: PCT/JP2018/018010
(87) International publication number: WO 2018/221147

(56) References cited:
- JP-A- H05 141 462
- JP-A- H08 105 434
- JP-A- 2002 174 283
- JP-A- 2003 118 346
- JP-A- 2007 331 617
- JP-A- 2015 151 097
- JP-U- H0 713 514
- KR-A- 20080 023 429

## Description

### TECHNICAL FIELD

The present invention relates to a joint structure of a stabilizer link, in which the stabilizer link configured to connect a suspension member and a stabilizer that are provided in a vehicle is joined to the stabilizer.

### BACKGROUND ART

A vehicle is provided with a suspension assembly for absorbing and reducing impacts and vibration transmitted from a road surface to a vehicle body through wheels, and a stabilizer for enhancing a roll stiffness of the vehicle. To connect the suspension assembly and the stabilizer, the vehicle utilizes a rod-like member called a stabilizer link. For example, as disclosed in Patent Literature Document 1, the stabilizer link includes a support bar and a ball joint provided on each end of the support bar.

The stabilizer link according to Patent Literature Document 1 consists of a ball stud having ball portions and a stud portion, and a housing provided on each side of the support bar and configured to receive a ball portion of the ball stud to allow a rotation of the ball portion. A ball seat made of resin is disposed inside the housing between the inner wall of the housing and the ball portion of the ball stud.

JP 2003 118346 A discloses a hollow stabilizer mounted onto a vehicle, with a mounting portion of the stabilizer comprising a through hole through which a stud of a stabilizer control link is inserted.

### CITATION LIST

### PATENT DOCUMENTS

Patent Literature Document 1: JP 2016-84057 A

### SUMMARY OF THE INVENTION

To join the stabilizer link according to Patent Literature Document 1 to the stabilizer, both end portions of the stabilizer are pressed to form flattened attachment portions. Each of the pair of attachment portions has a through hole, and a stud portion of a ball stud is inserted into and extends through the through hole. An external thread is formed on the stud portion, and the external thread of the stud portion projecting through the through hole and an internal thread of a nut are screwed together. With this screw fastening engagement, the stabilizer is joined to the stabilizer link.

However, the joint structure using the screw fastening engagement of the stabilizer link according to Patent Literature Document 1 inevitably requires anti-dropping measures for preventing the stabilizer link from dropping from the stabilizer due to loosening of the internal thread of the nut relative to the external thread of the stud portion. For this reason, precise and detailed managements are required with respect to the size of the attachment portion, the smoothness around the through opening formed in the attachment portion, the thickness of the coating film, and the like. Accordingly, there is a room for improvement in such complicated anti-dropping measures for preventing the stabilizer link from dropping from the stabilizer.

The present invention has been made in view of the above, and a purpose of the present invention is to provide a joint structure of a stabilizer link, which can achieve a simple and steady joint without requiring anti-dropping measures for preventing the stabilizer link from dropping from the stabilizer.

There is provided a joint structure with a stabilizer link according to the present invention, in which the stabilizer link configured to connect a suspension member and a stabilizer that are provided in a vehicle is joined to the stabilizer, wherein the stabilizer link comprises a support bar and a ball joint provided on each end of the support bar, wherein each ball joint comprises a ball stud having a ball portion and a stud portion, and a housing configured to support the ball portion of the ball stud so as to allow a rotation of the ball portion, wherein the stabilizer is constituted by a rod-like member made of metal, and the stabilizer has two end portions, each of which includes an attachment portion for joining the stabilizer link, and wherein each of the attachment portions has a through hole. An elastic member provided at the stud portion of the ball stud of a said ball joint at one end of the stabilizer link is suitable to be attached to the attachment portion through the through hole, the elastic member comprises a body portion shaped like a circular cylinder, and a tab portion provided on each of a pair of outer-side peripheral edge portions of the body portion, the stud portion of the ball stud is suitable to be joined to the attachment portion through the elastic member in such a manner that while the elastic member is attached to the through hole, the body portion abuts on an inner circumferential wall portion of the through hole and the tab portions are located to cover a pair of outer circumferential portions of the through hole, the elastic member further comprises a penetration hole through which the stud portion of the ball stud is inserted into the elastic member, the elastic member is provided on the stud portion by bonding the stud portion to the penetration hole with the stud portion attached to the penetration hole, the stud portion of the ball stud comprises a flange portion shaped like a circular disc, and the elastic member is bonded to the flange portion with the stud portion of the ball stud attached to the penetration hole.

In the joint structure with the stabilizer link according to the present invention (1), the stud portion of the ball stud is suitable to be joined to the attachment portion through the elastic member in such a manner that while the elastic member is attached to the through hole, the body portion abuts on an inner circumferential wall portion of the through hole and the tab portions are located to cover a pair of outer circumferential portions of the through hole; therefore, It is possible to provide a joint structure of a stabilizer link, which can achieve a simple and steady joint without requiring anti-dropping measures for preventing the stabilizer link from dropping from the stabilizer.

### ADVANTAGEOUS EFFECTS OF THE INVENTION

According to the present invention, there is provided a joint structure with a stabilizer link, which can achieve a simple and steady joint without requiring anti-dropping measures for preventing the stabilizer link from dropping from the stabilizer.

### BRIEF DESCRIPTION OF THE DRAWINGS

FIG. 1 is a perspective view illustrating a stabilizer link attached to a vehicle.
FIG. 2A is a perspective view illustrating a joint structure of a stabilizer link according to an embodiment of the present invention.
FIG. 2B is a perspective view illustrating the joint structure of the stabilizer link according to the embodiment of the present invention.
FIG. 3 is a side view illustrating the joint structure of the stabilizer link according to the embodiment of the present invention.
FIG. 4A is a perspective view of an elastic member that plays an important role in the present invention.
FIG. 4B is a front view of the elastic member.
FIG. 4C is a side view of the elastic member.
FIG. 5A is an explanatory view of a modification of the elastic member.
FIG. 5B is an explanatory view of a modification of the elastic member.
FIG. 6A is an explanatory view of a modification of a tab portion provided on the elastic member.
FIG. 6B is an explanatory view of a modification of the tab portion provided on the elastic member.
FIG. 6C is an explanatory view of a modification of the tab portion provided on the elastic member.
FIG. 6D is an explanatory view of a modification of the tab portion provided on the elastic member.
FIG. 6E is an explanatory view of a modification of the tab portion provided on the elastic member.
FIG. 6F is an explanatory view of a modification of the tab portion provided on the elastic member.

### DESCRIPTION OF EMBODIMENTS

A joint structure of a stabilizer link according to an embodiment of the present invention will be described with reference made to the drawings where appropriate.

In the drawings shown below, as a general rule, a common reference numeral is assigned to members having a common function or members having a corresponding function. Further, for convenience of explanation, the size or the shape of a member may be modified or exaggerated to schematically illustrate the member.

### <Structure of Stabilizer Link 11 and its Periphery>

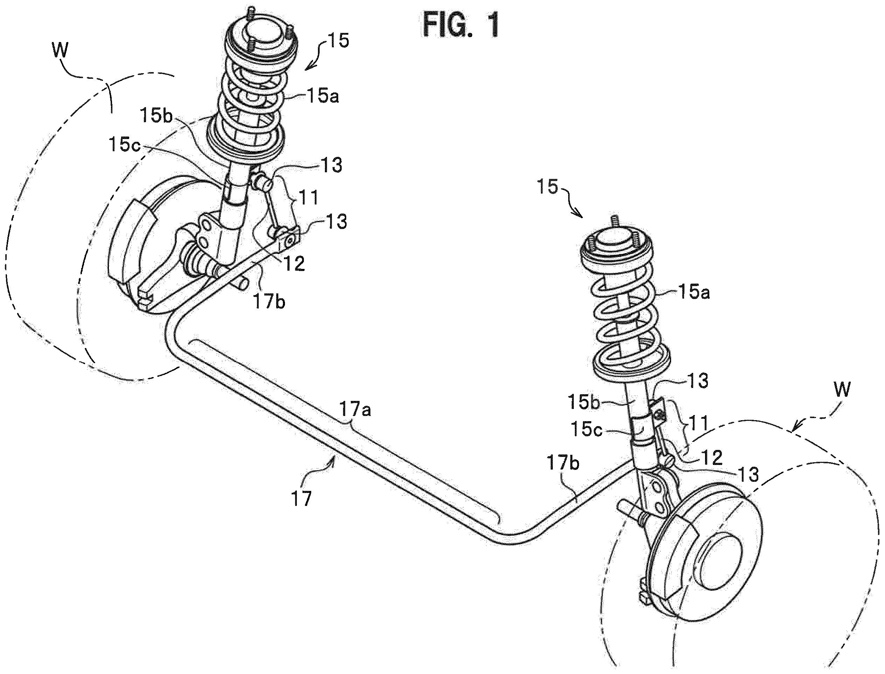

First, the structure of a stabilizer link 11 and its periphery will be described with reference to an example, in which the stabilizer link 11 is attached to a vehicle (not shown). FIG. 1 is a perspective view illustrating the stabilizer link 11 attached to a vehicle.

As seen in FIG. 1, wheels W are attached to a vehicle body (not shown) of a vehicle through suspension members 15. To absorb and reduce impacts and vibration transmitted from a road surface to the vehicle body through the wheels W, the suspension member 15 includes a coil spring 15a and a shock absorber 15b.

As seen in FIG. 1, right and left suspension members 15 are connected through a stabilizer 17, for example, made of a spring steel rod having approximately a U-shape. To enhance the roll stiffness of the vehicle body (resistance against torsional deformation) to thereby suppress roll of the vehicle, the stabilizer 17 includes a torsion bar portion 17a extending between the right wheel W and the left wheel W, and a pair of arm portions 17b bent at both ends of the torsion bar portion 17a and extending from the both ends.

The stabilizer 17 and the shock absorber 15b for supporting the wheel W are connected by a stabilizer link 11. This connection is applicable to both right and left wheels W. As seen in FIG. 1, the stabilizer link 11 includes a support bar 12 made of metal such as steel and having an approximately straight shape, and a ball joint 13 provided on each end of the support bar 12.

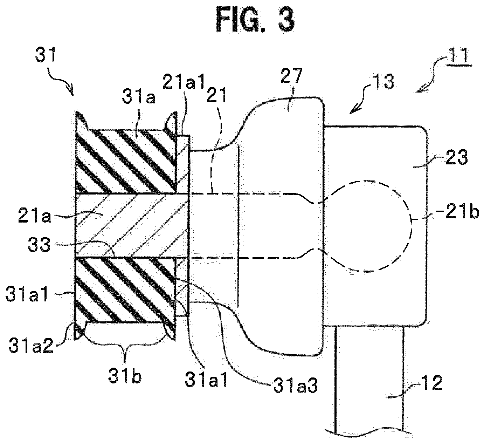

As seen in FIG. 3 to be described later, the ball joint 13 includes a ball stud 21 made of metal such as steel, and a housing 23, for example, made of plastic. The ball stud 21 consists of a stud portion 21a shaped like a circular cylinder and located at one end portion thereof, and a ball portion 21b shaped like a sphere and located at the other end portion thereof. The stud portion 21a and the ball portion 21b are welded together. The stud portion 21a and the ball portion 21b may be formed integrally as a unitary member. The housing 23 is provided on each end of the support bar 12, and is configured to rotatably support the ball portion 21b of the ball stud 21. Preferably, the plastic material used for the housing 23 may include, for example, fiber-reinforced plastics (FRP), carbon fiber-reinforced plastics (CFRP). However, the housing 23 is not limited to one made of plastic and may be made of metal. The pair of ball joint 13 have the same configuration.

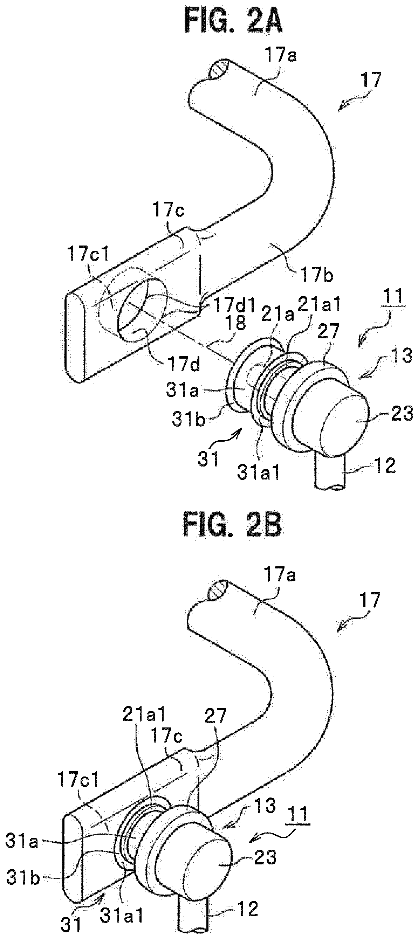

As seen in FIGS. 2A, 2B and 3 to be described later, the stud portion 21a of the ball stud 21 is configured to have a flange portion 21a1. A dust cover 27 is mounted between one end of the housing 23 and the circular disc-shaped flange portion 21a1 provided on the stud portion 21a to cover a gap therebetween; the dust cover 27 is made of an elastic material such as rubber and having a circular shape. The dust cover 27 works to keep foreign matter such as rain water and dust from entering the ball joint 13.

As seen in FIG. 1, one of the ball joints 13 among the pair of ball joints 13 is fixed to a bracket 15c of the shock absorber 15b through screw fastening. Meanwhile, for example, as seen in FIGS. 1, 2A, 2B and 3, the other one of the ball joints 13 is joined to an attachment portion 17c formed on the arm portion 17b of the stabilizer 17 using a joint structure of a stabilizer link according to this embodiment of the present invention. This will be described below in detail.

### <Joint Structure of Stabilizer Link according to Embodiment of Present Invention>

With reference to FIGS. 2A, 2B, 3, 4A, 4B and 4C, a joint structure of a stabilizer link according to this embodiment of the present invention will be described.

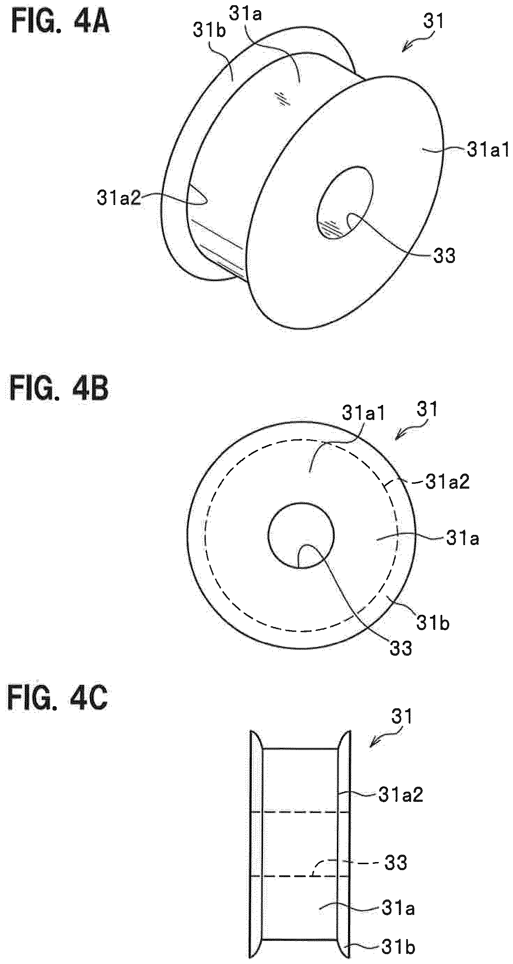

FIGS. 2A and 2B are perspective views each illustrating a joint structure of a stabilizer link according to this embodiment of the present invention. FIG. 3 is a side view illustrating the joint structure of the stabilizer link according to this embodiment of the present invention. FIG. 4A is a perspective view of an elastic member 31 that plays an important role in the present invention. FIG. 4B is a front view of the elastic member 31. FIG. 4C is a side view of the elastic member 31.

As seen in FIGS. 2A, 2B and 3, the arm portion 17b of the stabilizer 17 has a flattened attachment portion 17c formed by press working. The attachment portion 17c has a through hole 17d shaped to receive a circular cylinder to be fitted therein. The through hole 17d is directed to a direction orthogonal to the longitudinal direction of the arm portion 17b. An elastic member 31 provided on the stud portion 21a of the ball stud 21 is attached to the through hole 17d of the attachment portion 17c.

Although a material to form the elastic member 31 is not limited, it is preferable that a rubber elastic resin material such as natural rubber, epoxidized natural rubber, isoprene rubber, butadiene rubber, butadiene-isoprene rubber, styrene-butadiene rubber, chloroprene rubber, acrylonitrile-butadiene rubber (NBR), hydrogenated nitrile butadiene rubber, chlorinated polyethylene rubber, butyl rubber, acrylic rubber, ethylene-vinyl acetate-acrylic acid ester copolymer rubber, and silicone rubber is used.

As seen in FIGS. 3, 4A, 4B and 4C, a body portion 31a of the elastic member 31 has a circular cylindrical central portion, and a penetration hole 33 extends through the central portion; the stud portion 21a of the ball stud 21 is inserted into the penetration hole 33. The inside diameter of the penetration hole 33 formed in the body portion 31a of the elastic member 31 is substantially equal to or slightly larger than the outside diameter of the stud portion 21a.

The body portion 31a of the elastic member 31 serves to firmly bond the stud portion 21a of the ball stud 21 to the elastic member 31. This bonding function is achieved by vulcanized bonding of the inner wall of the penetration hole 33 formed in the body portion 31a and the stud portion 21a of the ball stud 21. The vulcanized bonding is carried out by applying an appropriate amount of adhesive to both of or at least one of the inner wall of the penetration hole 33 and the outer wall of the stud portion 21a so that an appropriate thickness of the adhesive layer is interposed between the inner wall of the penetration hole 33 and the outer wall of the stud portion 21a.

As seen in FIG. 3, among a pair of donut-shaped end faces 31a1 of the body portion 31a, a flange-side end face 31a3 that is located on the side opposite to the flange portion 21a1 may be vulcanized bonded to the circular disc-shaped flange portion 21a1 provided on the stud portion 21a to enhance the bonding function of the body portion 31a. This vulcanized bonding is also carried out by applying an appropriate amount of adhesive to both of or at least one of the flange-side end face 31a3 and the flange portion 21a1 so that an appropriate thickness of the adhesive layer is interposed between the flange-side end face 31a3 and the flange portion 21a1.

The body portion 31a of the elastic member 31 has a holding function to tightly hold the outer wall of the body portion 31a against the inner wall of the through hole 17d with the elastic member 31 attached to the through hole 17d of the attachment portion 17c. This holding function is achieved by the size relationship in which the outside diameter of the body portion 31a of the elastic member 31 is substantially equal to or slightly smaller than the inside diameter of the through hole 17d of the attachment portion 17d.

Further, the body portion 31a of the elastic member 31 is interposed between the stabilizer link 11 and the stabilizer 17 to perform a vibration isolating function to prevent transmission of vibration between the stabilizer link 11 and the stabilizer 17. This vibration isolating function is achieved by a vibration isolating characteristic according to the spring constant previously set for the elastic member 31.

The elastic member 31 has tab portions 31b having an anti-dropping (stopper) function to prevent the stabilizer link 11 from dropping from the attachment portion 17c of the arm portion 17b of the stabilizer 17. To perform this stopper function, as seen in FIGS. 3, 4A, 4B and 4C, the tab portion 31b of the elastic member 31 is annularly and integrally formed on each peripheral edge portion 31a2 of a pair of donut-shaped end faces 31a1 of the body portion 31a (see FIGS. 4A and 4B) to jut out radially outward.

As seen in FIG. 2B, the tab portions 31b of the elastic member 31 are configured such that when the elastic member 31 is attached to the through hole 17d of the attachment portion 17c, circumferential edge portions 17d1 of the through hole 17d (see FIG. 2A) are covered by the tab portions 31b.

With this configuration, if a force acts on the elastic member 31 along an axial direction 18 of the stud portion 21a (see FIG. 2A), the tab portions 31b of the elastic member 31 abut on side walls 17c1 of the attachment portion 17c (see FIGS. 2A and 2B) that form surfaces continuous with the circumferential edge portions 17d1 of the through hole 17d to provide a three-dimensional obstacle, so that the force can be deviated and dropping of the elastic member 31 from the through hole 17d of the attachment portion 17c can be prevented in advance.

To attach the elastic member 31 to the through hole 17d of the attachment portion 17c, the elastic member 31 provided on the stud portion 21a of the ball stud 21 is press-fitted into the through hole 17d of the attachment portion 17c along the axial direction 18 of the stud portion 21a (see FIG. 2A).

If the stabilizer link 11 is to be removed from the attachment portion 17c for replacement of the stabilizer link 11 for instance, a jig (not shown) may be used to apply a force opposite to that applied upon attachment (press-fitting) of the stud portion 21a of the ball stud 21; this force is applied to the stud portion 21a along the axial direction 18 of the stud portion 21a (see FIG. 2A), while the attachment portion 17c of the arm portion 17b of the stabilizer 17 is fixed.

The slip out load of the vulcanized bonding portion (between the inner wall of the penetration hole 33 formed in the body portion 31a and the stud portion 21a of the ball stud 21) is greater than the slip out load of the press-fitted portion (between the inner wall of the through hole 17d of the attachment portion 17c and the outer wall of the body portion 31a). For this reason, the elastic member 31 provided on the stud portion 21a can be removed from the through hole 17d of the attachment portion 17c without fail by the above-described procedures for removing the stabilizer link 11.

With the joint structure of the stabilizer link 11 according to this embodiment of the present invention, it is possible to achieve a simple and steady joint without requiring anti-dropping measures for preventing the stabilizer link 11 from dropping from the stabilizer 17.

Further, vibration and noise can be suppressed, so that the ride comfort of the vehicle and the quietness in the passenger compartment can be retained satisfactorily.

Further, since the stabilizer link 11 can be removed easily and reliably from the attachment portion 17c, for example, when the replacement of the stabilizer link 11 is necessary, the workload of the vehicle user can be greatly reduced as compared with the configuration in which an assembly of the stabilizer 17 and the stabilizer link 11 is replaced with another assembly when the replacement of the stabilizer link 11 is necessary.

Further, with the joint structure of the stabilizer link 11 according to this embodiment of the present invention, a tubular member for supporting the elastic member 31 is not required; this leads to reduced weight and cost reduction of the stabilizer link 11 as one component.

Further, an auxiliary effect can be expected in that precise and detailed managements are not required for the size of the attachment portion 17c, the smoothness around the through opening 17d formed in the attachment portion 17c, the thickness of the coating film, and the like.

### <Modifications of Elastic Member 31>

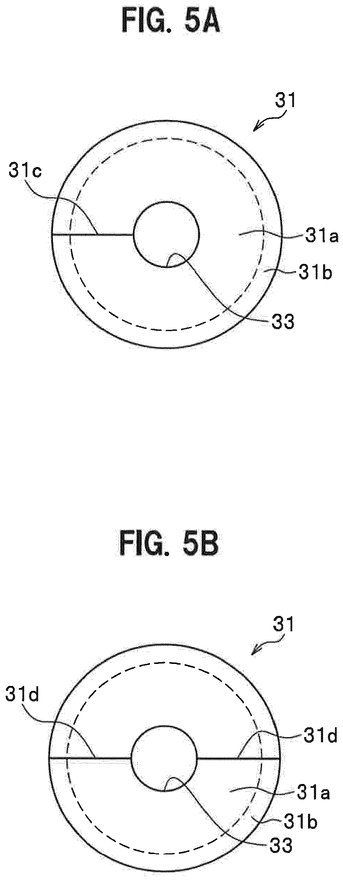

With reference to FIGS. 5A and 5B, modifications of the elastic member 31 will be described below. FIGS. 5A and 5B are explanatory views (front views) each illustrating a modification of the elastic member 31.

In a modification of the elastic member 31 as shown in FIG. 5A, a slit 31c is formed in an axially radial direction of the elastic member 31. Accordingly, adhesive can be applied easily to the inner wall of the penetration hole 33 of the body portion 31a by expanding the elastic member 31 at the slit 31c.

Further, as seen in a modification of the elastic member 31 shown in FIG. 5B, the elastic member 31 may be divided into two equal halves by slits formed along a center line 31d extending in an axially radial direction of the elastic member 31. With this configuration, adhesive can be applied more easily to the inner wall of the penetration hole 33 of the body portion 31a.

It should be noted that as with the elastic member 31 shown in FIG. 4A and the like, an appropriate amount of adhesive is applied to the outer wall of the stud portion 21a when appropriate.

### <Modifications of Tab Portion 31b Provided on Elastic Member 31>

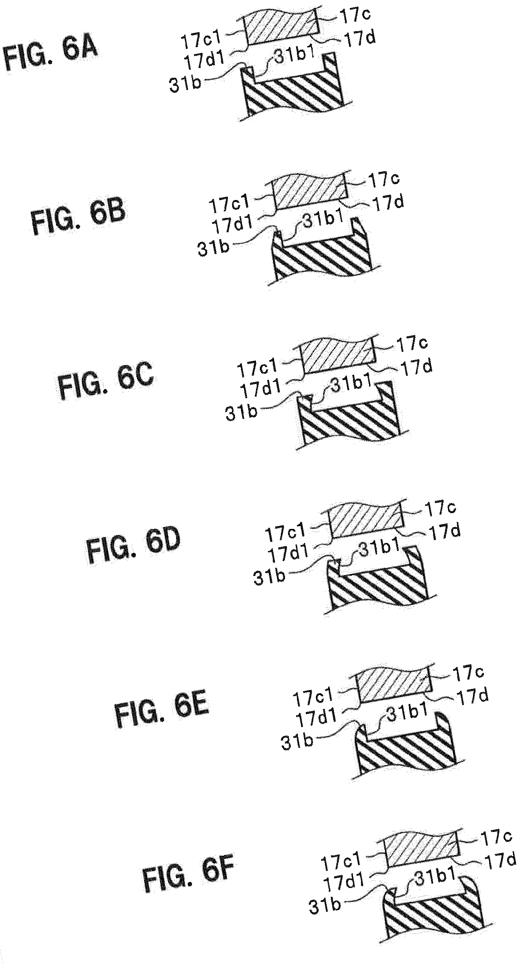

Next, modifications of the tab portion 31b provided on the elastic member 31 will be described with reference made to FIGS. 6A to 6F. FIGS. 6A to 6F are explanatory views (side views) according to modifications of the tab portion 31b provided on the elastic member 31. In FIGS. 6A to 6F, for convenience of explanation, the through hole 17d of the attachment portion 17c and the tab portion 31b of the elastic member 31 are shown such that the center line of the through hole 17d and the center line of the tab portion 31b are shifted in the axially radial direction (although these centerlines intrinsically coincide with each other in the actual joint structure of the stabilizer link 11).

In the modifications of the tab portion 31b provided on the elastic member 31 as shown in FIGS. 6A, 6B and 6E, inner tab end portions 31b1 of the tab portions 31b (see FIGS. 6A, 6B and 6E) are formed to rise along the side walls 17c1 of the attachment portion 17c; the inner tab end portions 31b1 face to the side walls 17c1 of the attachment portion 17c that form surfaces continuous with the circumferential edge portions 17d1 of the through hole 17d.

With this configuration, even if a force acts on the elastic member 31 along the axial direction 18 of the stud portion 21a (see FIG. 2A) while the elastic member 31 is attached to the through hole 17d of the attachment portion 17c, the inner tab end portions 31b1 rising at the tab portion 31b of the elastic member 31 abut on the side walls 17c1 of the attachment portion 17c that form surfaces continuous with the circumferential edge portions 17d1 of the through hole 17d to provide a steady three-dimensional obstacle. As a result, the force can be deviated and dropping of the elastic member 31 from the through hole 17d of the attachment portion 17c can be prevented reliably.

In the modifications of the tab portion 31b provided on the elastic member 31 as shown in FIGS. 6C, 6D and 6F, inner tab end portions 31b1 of the tab portions 31b (see FIGS. 6A, 6B and 6E) are formed to slant toward the side walls 17c1 of the attachment portion 17c; the inner tab end portions 31b1 face to the side walls 17c1 of the attachment portion 17c that form surfaces continuous with the circumferential edge portions 17d1 of the through hole 17d.

With this configuration, even if a force acts on the elastic member 31 along the axial direction 18 of the stud portion 21a (see FIG. 2A) while the elastic member 31 is attached to the through hole 17d of the attachment portion 17c, the inner tab end portions 31b1 slanting at the tab portion 31b of the elastic member 31 strongly abut on the side walls 17c1 of the attachment portion 17c that form surfaces continuous with the circumferential edge portions 17d1 of the through hole 17d to provide a more steady three-dimensional obstacle. As a result, the force can be deviated and dropping of the elastic member 31 from the through hole 17d of the attachment portion 17c can be prevented more reliably.

### <Modification of Stud portion 21a of Ball Stud 21>

Next, a modification of the stud portion 21a of the ball stud 21 will be described. In the stud portion 21a of the ball stud 21 according to this modification, a surface processing such as sandblasting has been carried out to roughen the surface roughness at the outer circumferential wall (adhesive surface) around the axis of the stud portion 21a for the purpose of improvement in adhesion using vulcanized bonding and adhesive.

In place of the surface processing to roughen the surface roughness or in addition to this surface processing, another surface treatment such as knurling may be carried out to the outer circumferential wall (adhesive surface) of the stud portion 21a of the ball stud 21.

### <Advantageous Effects of Joint Structure of Stabilizer Link according to Embodiment of Present Invention>

Next, advantageous effects achieved by the joint structure of the stabilizer link according to this embodiment of the present invention will be described.

The joint structure of a stabilizer link according to the embodiment, in which a stabilizer link 11 configured to connect a suspension member 15 and a stabilizer 17 that are provided in a vehicle is joined to the stabilizer 17, wherein the stabilizer link 11 comprises a support bar 12 and a ball joint 13 provided on each end of the support bar 12.

The ball joint comprises a ball stud 21 having a ball portion 21b and a stud portion 21a, and a housing 23 configured to support the ball portion 21b of the ball stud 21 so as to allow a rotation of the ball portion 21b.

The stabilizer 17 is constituted by a rod-like member made of metal. The stabilizer 17 has two end portions, each of which includes an attachment portion 17c for joining the stabilizer link 11. Each of the attachment portions 17c has a through hole 17d, through which an elastic member 31 provided at the stud portion 21a of the ball stud 21 is attached to the attachment portion 17c.

The elastic member 31 comprises a body portion 31a shaped like a circular cylinder, and a tab portion 31b provided on each of peripheral edge portions 31a2 of a pair of donut-shaped end faces 31a1 of the body portion 31a.

The stud portion 21a of the ball stud 21 is joined to the attachment portion 17c through the elastic member 31 in such a manner that while the elastic member 31 is attached to the through hole 17d, the body portion 31a abuts on an inner circumferential wall portion of the through hole 17d and the tab portions 31b are located to cover circumferential edge portions 17d1 of the through hole 17d.

With this joint structure of a stabilizer link according to the embodiment, it is possible to achieve a simple and steady joint without requiring anti-dropping measures for preventing the stabilizer link 11 from dropping from the stabilizer 17. Further, vibration and noise can be suppressed, so that the ride comfort of the vehicle and the quietness in the passenger compartment can be retained satisfactorily.

The joint structure of the stabilizer link according to the embodiment is configured such that the elastic member 31 further comprises a penetration hole 33 through which the stud portion 21a of the ball stud 21 is inserted into the elastic member, and the elastic member 31 is provided on the stud portion 21a by bonding the stud portion 21a to the penetration hole 33 with the stud portion 21a attached to the penetration hole 33.

With this joint structure of a stabilizer link according to the embodiment, since the elastic member 31 is provided on the stud portion 21a by bonding the stud portion 21a to the penetration hole 33 with the stud portion 21a attached to the penetration hole 33, the elastic member 31 can be fixed reliably to the stud portion 21a.

The joint structure of the stabilizer link according to the embodiment is configured such that the stud portion 21a of the ball stud 21 comprises a flange portion 21a1 shaped like a circular disc, and the elastic member 31 is bonded to the flange portion 21a1 with the stud portion 21a attached to the penetration hole 33.

With this joint structure of a stabilizer link according to the embodiment, since the elastic member 31 is bonded to the flange portion 21a1 with the stud portion 21a attached to the penetration hole 33, the elastic member 31 can be fixed more reliably to the stud portion 21a.

### <Other Embodiments>

The above-described embodiments have been exemplified as examples to embody the present invention. It is therefore to be understood that the technical scope of the present invention is not limited to these embodiments. This is because various changes or modifications of the present invention may be made without departing from the present invention as defined in claim 1.

For example, in the modifications of the tab portions 31b provided on the elastic member 31 according to the present invention, the inner tab end portions 31b1 of the tab portions 31b shown in FIGS. 6A to 6F have the same shape (rising shape or slanting shape) for one elastic member 31; however, the present invention is not limited to this specific example. The tab portions 31b of one elastic member 31 may have different shaped inner tab end portions 31b1 from each other.

Further, the modifications of tab portions 31b provided on the elastic member 31 according to the present invention as shown in FIGS. 6A to 6F have been exemplified as examples to embody the present invention; however, the present invention is not limited to these examples. The tab portions 31b provided on the elastic member 31 according to the present invention may be configured to have any configurations as long as the anti-dropping (stopper) function to prevent the stabilizer link 11 from dropping from the attachment portion 17c can be performed.

### DESCRIPTION OF REFERENCE NUMERALS

- 11: stabilizer link
- 12: support bar
- 13: ball joint
- 15: suspension member
- 17: stabilizer
- 17c: attachment portion
- 17d: through hole
- 17d1: circumferential edge portions of through hole
- 21: ball stud
- 21a: stud portion
- 21a1: flange portion
- 21b: ball portion
- 23: housing
- 31: elastic member
- 31a: body portion
- 31a1: a pair of end faces of body portion
- 31a2: peripheral edge portions of end faces
- 31a3: flange-side end face
- 31b: tab portion
- 33: penetration hole

## Claims

1. A joint structure with a stabilizer link (11), in which the stabilizer link configured to connect a suspension member (15) and a stabilizer (17) that are provided in a vehicle is joined to the stabilizer,
wherein the stabilizer link (11) comprises a support bar (12) and a ball joint (13) provided on each end of the support bar,
wherein each ball joint (13) comprises a ball stud (21) having a ball portion (21b) and a stud portion (21a), and a housing (23) configured to support the ball portion (21b) of the ball stud so as to allow a rotation of the ball portion,
wherein the stabilizer (17) is constituted by a rod-like member made of metal, and the stabilizer has two end portions, each of which includes an attachment portion (17c) for joining the stabilizer link (11), and
wherein each of the attachment portions (17c) has a through hole (17d),
an elastic member (31) provided at the stud portion (21a) of the ball stud of a said ball joint (13) at one end of the stabilizer link (11) is suitable to be attached to the attachment portion (17c) through the through hole (17d),
the elastic member (31) comprises a body portion (31a) shaped like a circular cylinder, and a tab portion (31b) provided on each of a pair of outer-side peripheral edge portions (31a2) of the body portion,
the stud portion (21a) of the ball stud (21) is suitable to be joined to the attachment portion (17c) through the elastic member (31) in such a manner that while the elastic member is attached to the through hole (17d), the body portion (31a) abuts on an inner circumferential wall portion of the through hole and the tab portions (31b) are located to cover a pair of outer circumferential portions of the through hole,
the elastic member (31) further comprises a penetration hole (33) through which the stud portion (21a) of the ball stud (21) is inserted into the elastic member (31),
the elastic member (31) is provided on the stud portion (21a) by bonding the stud portion to the penetration hole (33) with the stud portion attached to the penetration hole,
the stud portion (21a) of the ball stud (21) comprises a flange portion (21a1) shaped like a circular disc, and
the elastic member (31) is bonded to the flange portion (21a1) with the stud portion (21a) of the ball stud (21) attached to the penetration hole (33).

## Patentansprüche

1. Verbindungsstruktur mit einer Stabilisatorverbindung (11), bei der die Stabilisatorverbindung, die dazu konfiguriert ist, ein in einem Fahrzeug bereitgestelltes Aufhängungselement (15) und einen Stabilisator (17) zu verbinden, an den Stabilisator angeschlossen ist,
wobei die Stabilisatorverbindung (11) eine Stützstange (12) und ein an jedem Ende der Stützstange bereitgestelltes Kugelgelenk (13) umfasst,
wobei jedes Kugelgelenk (13) einen Kugelzapfen (21) mit einem Kugelabschnitt (21b) und einem Zapfenabschnitt (21a) und ein Gehäuse (23) umfasst, das so konfiguriert ist, dass es den Kugelabschnitt (21b) des Kugelzapfens stützt, um eine Drehung des Kugelabschnitts zu ermöglichen,
wobei der Stabilisator (17) aus einem stabähnlichen Element aus Metall besteht, und der Stabilisator zwei Endabschnitte aufweist, von denen jeder einen Befestigungsabschnitt (17c) zum Anschließen der Stabilisatorverbindung (11) beinhaltet, und
wobei jeder der Befestigungsabschnitte (17c) ein Durchgangsloch (17d) aufweist, ein elastisches Element (31), das an dem Zapfenabschnitt (21a) des Kugelzapfens eines Kugelgelenks (13) an einem Ende der Stabilisatorverbindung (11) bereitgestellt ist, geeignet ist, an dem Befestigungsabschnitt (17c) durch das Durchgangsloch (17d) befestigt zu werden,
das elastische Element (31) einen Körperabschnitt (31a), der wie ein Kreiszylinder geformt ist, und einen Laschenabschnitt (31b) umfasst, der an jedem von einem Paar außenseitiger Umfangskantenabschnitte (31a2) des Körperabschnitts bereitgestellt ist,
der Zapfenabschnitt (21a) des Kugelzapfens (21) geeignet ist, über das elastische Element (31) an den Befestigungsabschnitt (17c) derart angeschlossen zu werden, dass, während das elastische Element an dem Durchgangsloch (17d) befestigt ist, der Körperabschnitt (31a) an einem inneren Abschnitt der Umfangswand des Durchgangslochs anliegt und die Laschenabschnitte (31b) so angeordnet sind, dass sie ein Paar äußerer Umfangsabschnitte des Durchgangslochs abdecken,
das elastische Element (31) weiter ein Durchdringungsloch (33) umfasst, durch das der Zapfenabschnitt (21a) des Kugelzapfens (21) in das elastische Element (31) eingeführt wird,
das elastische Element (31) an dem Zapfenabschnitt (21a) bereitgestellt wird, indem der Zapfenabschnitt an das Durchdringungsloch (33) geklebt wird, wobei der Zapfenabschnitt an dem Durchdringungsloch befestigt wird,
der Zapfenabschnitt (21a) des Kugelzapfens (21) einen Flanschabschnitt (21a1) umfasst, der wie eine kreisförmige Scheibe geformt ist, und
das elastische Element (31) an den Flanschabschnitt (21a1) geklebt ist, wobei der Zapfenabschnitt (21a) des Kugelzapfens (21) an dem Durchdringungsloch (33) befestigt ist.

## Revendications

1. Structure d'articulation avec une liaison stabilisatrice (11), dans laquelle la liaison stabilisatrice configurée pour relier un élément de suspension (15) et un stabilisateur (17) qui sont prévus dans un véhicule est assemblée au stabilisateur,
dans laquelle la liaison stabilisatrice (11) comprend une barre de support (12) et un joint à rotule (13) prévu sur chaque extrémité de la barre de support,
dans laquelle chaque joint à rotule (13) comprend un pivot à rotule (21) présentant une partie rotule (21b) et une partie pivot (21a), et un boîtier (23) configuré pour soutenir la partie rotule (21 b) du pivot à rotule de manière à permettre une rotation de la partie rotule,
dans laquelle le stabilisateur (17) est constitué d'un élément en forme de tige en métal, et le stabilisateur présente deux parties d'extrémité, dont chacune inclut une partie de fixation (17c) pour assembler la liaison stabilisatrice (11), et
dans laquelle chacune des parties de fixation (17c) présente un trou traversant (17d),
un élément élastique (31) prévu au niveau de la partie pivot (21 a) du pivot à rotule d'un dit joint à rotule (13) à une extrémité de la liaison stabilisatrice (11) est approprié pour être fixé à la partie de fixation (17c) à travers le trou traversant (17d),
l'élément élastique (31) comprend une partie corps (31a) en forme de cylindre circulaire, et une partie languette (31b) prévue sur chacune d'une paire de parties bord périphérique côté extérieur (31a2) de la partie corps,
la partie pivot (21a) du pivot à rotule (21) est adaptée pour être assemblée à la partie de fixation (17c) par l'intermédiaire de l'élément élastique (31) de telle manière que pendant que l'élément élastique est fixé au trou traversant (17d), la partie corps (31a) vient en butée sur une partie paroi circonférentielle intérieure du trou traversant et les parties languettes (31b) sont situées de manière à recouvrir une paire de parties circonférentielles extérieures du trou traversant,
l'élément élastique (31) comprend en outre un trou de pénétration (33) à travers lequel la partie pivot (21a) du pivot à rotule (21) est insérée dans l'élément élastique (31),
l'élément élastique (31) est disposé sur la partie pivot (21a) en liant la partie pivot au trou de pénétration (33) avec la partie pivot étant fixée au trou de pénétration,
la partie pivot (21a) du pivot à rotule (21) comprend une partie bride (21a1) en forme de disque circulaire, et
l'élément élastique (31) est lié à la partie bride (21 a1) avec la partie pivot (21a) du pivot à rotule (21) fixée au trou de pénétration (33).
